# EUROPEAN PATENT APPLICATION

(11) **EP 3 835 497 A1**
(43) Date of publication of application: **16.06.2021**
(21) Application number: 20211577.0
(22) Date of filing: 03.12.2020
(51) Int. Cl.: E03C 1/04, A47J 31/34

(54) **TAP WITH UNIT FOR DISPENSING CAPSULE BEVERAGES AND METHOD FOR DISPENSING BEVERAGES**

(30) Priority: 13.12.2019 IT 201900023877
(71) Applicant: Paini S.p.A. Rubinetterie, 28076 Pogno (NO) (IT)
(72) Inventor: PAINI, Marco, 28076 Pogno (IT)
(74) Representative: Biesse S.r.l.

(57) **Abstract**

A two-way or more-way tap (1) is described, which comprises a unit for dispensing beverages (6), of the interchangeable capsule type, which is fed with water delivered by the tap (1), by taking advantage of the pressure of the mains water so that the water crosses the capsules. The solution proposed consists in integrating a unit for dispensing beverages (6), of the capsule or pod type, into a tap (1), to obtain the dispensing of beverages prepared instantly by feeding water to the capsule inserted in the special unit (6). It is therefore possible to obtain the same outcome that can be obtained with coffee machines or multi-purpose machines, but without having to manage the respective dimensions.

## Description

### Field of application

The present invention relates to a tap provided with a unit for dispensing capsule beverages, in particular a kitchen tap provided with a unit for dispensing beverages of the interchangeable capsule type, and to a method for dispensing beverages.

### State of the art

As is known, the water taps used in the kitchen comprise a body, generally made of steel or brass, intended to be fastened to the sink, and a delivering spout for delivering water, which extends from the body and which is rotatable with respect to it. Hoses for feeding hot and cold water coming from under the sink are coupled to the tap body, and water for the user, which can be cold, hot or mixed, flows out of the delivering spout. In some models, the delivering spout is provided with a pull-up handshower.

The tap can be of the conventional type, with knobs, or with a mixer with a single control lever.

Some taps can also be equipped with interchangeable filtering cartridges positioned downstream of the mixer with respect to the direction of the water flow, whose function is to filter the water that is delivered through the tap delivering spout. Filter cartridges are mostly configured to remove some impurities from the water, such as small debris or calcifications, some dissolved metals, and possibly reduce the limescale content, in order to make the water more suitable for ingesting.

It is also known the use of filtering systems positioned under the sink and connected with the tap, usually a three-way tap: sanitary hot water, cold mains water, filtered water. A common three-way tap comprises a mixer of cold and hot water and a valve for filtered water. The filtering systems can be purely mechanical and, in this circumstance, the water passes through one or more filters by virtue of the mains pressure, or they can be motorized, that is equipped with an electrically powered motor to force the circulation of the water through the filters. The connection to the tap is normally made with a hose extending from the filtering system, placed under the sink, to the tap.

Normally, taps connected to filtering systems are of the three-way type, where the expression *"three-way"* has the following meaning. A way identifies the possibility of delivering a type of water, for example cold water or hot water. In a conventional two-way tap (one for cold water and one for hot water), it is possible to deliver cold water, hot water and mixed water through the delivering spout, thanks to the presence of a mixer. In a three-way tap, in addition to the normal operation of the delivering spout, just described, there is a further delivery duct fed with filtered water and expressly dedicated to this purpose. In other words, in a three-way tap, two ways are dedicated to mains hot/cold/mixed water and the third way is dedicated to filtered water provided by a special system positioned under the sink and connected to the tap.

Coffee machines are one of the most popular household appliances. As it is known, these are apparatuses equipped with a water tank, a boiler for heating the water - to a temperature of about 80°C - a coffee extraction unit, in which pre-packaged capsules or coffee pods containing coffee powder can be inserted, and a water circulation pump, which draws water from the tank to feed it to the boiler and the extraction unit. Since all the components just described have to be integrated, the coffee machines are bulky: sometimes it is difficult to find a position on the counter top of the kitchen. Moreover, they are often noisy, because the water circulation pump, usually of the piston type, is in itself noisy. Last but not least, coffee machines need electric power supply, which is not always reachable with the electric cable the same coffee machines are equipped with.

In recent times multi-purpose or multi-function machines have become widespread, capable of dispensing not only coffee, but also other beverages, for example cappuccino, tea, infusions, aromatised beverages, etc. These machines are structurally similar to a coffee machine and therefore share their respective limits described above.

US 2015/004288 describes a tap comprising a body that can be fastened to the counter top of a kitchen or to a sink, means for connecting to external pipes for feeding hot water, cold water, a conventional delivering spout, and controlling means that can be actuated by the user.

The tap is combined with a unit for dispensing beverages of the interchangeable capsule type, not integrated in the tap body but intended to be positioned at its side on the sink. The tap is also combined with a small boiler, preferably with electrical resistive elements, positioned under the sink, which supplies controlled hot water to the unit for dispensing beverages.

The boiler controls are separate and independent of the tap controlling means. Moreover, the water heated by the boiler is provided only to the unit for dispensing beverages and not to the tap. The integration between the two components is therefore minimal.

EP 3366850 describes a multi-way mixer tap, with a switching system between different inlets: besides the conventional inlets of cold water and hot water, the tap has an inlet of refrigerated water provided by a special unit positioned under the sink, and an inlet of purified water, also provided by a special unit positioned under the sink. Purified water can be obtained by heating with electric resistances. The water provided by the different inlets can be mixed as desired by the user.

A similar solution is described in DE 102013002236.

US 5816135 describes another solution according to the known art, in which the tap body comprises an inner volume, which is configured as an infusion chamber for the preparation of infusions starting from loose leaves, by using the hot water fed to the tap.

### Summary of the invention

Object of the present invention is therefore to provide an integrated solution that allows to optimise the use of the space available on the counter top of the kitchen, in particular on the sink, that is a solution that allows to eliminate the encumbrance of a coffee machine or multi-purpose machine, without renouncing the beverages that normally these machines dispense.

Another object of the present invention is to provide a method for dispensing beverages, for example coffee or tea, without the use of special machines, which encumber the counter top of the kitchen.

The present invention, in a first aspect thereof, therefore relates to the tap according to claim 1.

In particular, the tap is configured with two or more ways and advantageously comprises a unit for dispensing beverages, of the interchangeable capsule type, which is fed with water delivered by the tap.

The solution proposed, which consists in integrating a unit for dispensing beverages into a tap, allows to dispense beverages instantly prepared by feeding water to the capsule inserted in the special unit, by taking advantage of the pressure of the water available to the tap and therefore without the need to use special machines.

It is therefore possible to obtain the same outcome that can be obtained with coffee machines or multi-purpose machines, but without having to manage the respective dimensions: the counter top of the kitchen or the sink remain indeed free. Neither the water tank and the boiler are no longer necessary, since cold and hot water is already available at the tap, nor the water circulation pump is no longer necessary, since the mains water pressure is sufficient to get water to pass through the tap and the capsule.

However, if you would like to add a boiler, it would be possible to add it under the counter top or sink.

Being able to instantly prepare and dispense a hot beverage, for example coffee or tea, or a cold beverage, for example lemonade, without using a special home appliance also solves the problem of the continuous maintenance that these home appliances require: consider for example the need to carry out periodic decalcification cycles of the boiler in the coffee machines.

The elimination of the coffee machine or multi-purpose machine is only one of the advantages that can be obtained thanks to the solution proposed. Another advantage is the possibility of dispensing the beverages at the temperature desired by each consumer. In most coffee machines, for example, it is not possible to adjust the temperature of the water used for the preparation of the coffee, but such temperature is regulated by the manufacturer; on the contrary, according to the present invention, the tap allows the user to send water to the capsule at the temperature desired, for example 70°C or 80°C, simply by controlling the tap accordingly. Similarly, if the user desires a fresh but not cold beverage, for example lemonade at room temperature, the user can have it by feeding mixed water at about 14-16°C to the unit for dispensing beverages, where a capsule with lemon preparation has been inserted, and not only mains cold water at 8-10°C.

By optionally also providing treated water, that is filtered or sparkling, the tap is even more versatile, because the variety of beverages that can be dispensed will be greater. As will be described in detail below, this characteristic can be implemented by equipping the tap with special connections to external devices, for example filtering systems or machines that add carbon dioxide to the mains water.

Ultimately, the tap according to the present invention integrates, in addition to the normal functions of a sink tap, also the possibility of dispensing hot or cold beverages by using special interchangeable capsules. This outcome is obtained with minimum dimensions and certainly smaller than the dimensions corresponding to those of a conventional tap and a coffee machine or a multi-purpose machine.

Unlike the taps of the known art equipped with filtering capsules, in the solution proposed the water sent to the capsule, from time to time inserted in the special unit, does not return to the inside of the tap to be delivered from the respective spout, but is delivered directly from the unit for dispensing beverages toward the outside. In practice, therefore, the tap according to the present invention has at least three ways and two outlets, as will be described below.

Preferably, in fact, the tap is configured with three or more ways, two ways for delivering cold water, hot water and mixed water through a delivering spout, as normally provided for example in mixer taps, and the third way for dispensing beverages through the unit for dispensing beverages.

Preferably, the tap comprises a body which can be fastened to the counter top of a kitchen or a sink, and means for connecting to external pipes for feeding hot water, cold water, for example the conventional hoses coming from the mains system, and optionally treated water, for example filtered water or sparkling water provided by a special apparatus, which is arranged under the sink and connected to the tap. The tap comprises a delivering spout, which extends from the tap body, and controlling means which can be operated by the user for controlling the delivery of hot water, cold water, mixed water and optionally treated water, if available. By virtue of this configuration, the unit for dispensing beverages can be selectively fed with hot water, cold water, mixed water and optionally treated water, at the user's choice.

The tap controlling means allow not only to regulate the water temperature, but also to selectively switch the inflow of water toward the delivering spout or the unit for dispensing beverages or, in case where separate and independent feeding pipes are available, to selectively control the delivery of water from each pipe.

For this purpose, the controlling means preferably comprise a mixer placed in fluid connection with the external pipes for feeding hot water and cold water, and placed in fluid communication with the delivering spout and preferably also with the unit for dispensing beverages, in such a way that the user can alternately and selectively feed water to the delivering spout and to the unit for dispensing beverages, at the user's choice.

Preferably, the controlling means also comprise a control panel of external devices for delivering treated water, or a switching element. Thanks to this arrangement, the unit for dispensing beverages is alternately and selectively placed in fluid communication with an external device for delivering treated water,6 or with the mixer, in such a way as to feed the unit for dispensing beverages with one of cold water at the minimum temperature available in the home system, hot water at the maximum temperature available in the home system, mixed water at the temperature desired, treated water, that is filtered (purified) or sparkling water.

The controlling means can be, for example, an electronic panel with buttons that can be interfaced with the external device, with a wiring inside the tap or in wireless mode.

In the preferred embodiment, the unit for dispensing beverages comprises a housing for a single capsule, inside which a food preparation is available, for example ground coffee, tea, natural extracts or food powders. At one side of the housing, there is an inlet of water coming from the tap controlling means or external pipes, and at an opposite side the housing is equipped with a first hole for dispensing the beverage prepared with the capsule. As mentioned above, in fact, the beverage is dispensed not through the delivering spout, but directly from the capsule dispensing unit.

Preferably, the housing is defined by a cup-shaped container equipped with the first dispensing hole, in which a single capsule can be inserted, and by a corresponding seat to which the cup-shaped container can be coupled by screwing or pressing, and at which the inlet of hot water or cold water or mixed water, and optionally treated water, is present.

Preferably, the capsules, which can also be defined as pods, are compostable and are marketable through the available sales channels: organised large-scale distribution (Grande Distribuzione Organizzata, GDO), specialised shops, Internet. For example, the capsules are made of a plastic material derived from maize starch.

In the preferred embodiment, the unit for dispensing beverages also comprises a second dispensing hole fed with treated water. In other words, the capsule dispensing unit is fed with two ducts, one that intercepts the capsule, to allow the preparation and dispensing of the beverage, the other that bypasses the capsule, to allow the simple delivery of treated water to the user.

The Applicant reserves the right to file a divisional patent application for a dispensing unit provided with the second dispensing hole just described, that is provided with the bypass duct.

More in detail, preferably, the unit for dispensing beverages comprises a first duct for the inflow of water, which intercepts the housing in which a capsule can be inserted, and a second duct, defined as bypass duct, which does not intercept the housing, for independently delivering treated water. In this sense, the tap can be defined as four-way tap: two ways are defined by the tap delivering spout, another way by the path in which the capsule is present and the last way by the path for delivering the treated water only (bypass).

As mentioned above, the water fed to the first duct or the second duct of the unit for dispensing beverages is directly delivered outside the tap and is not conveyed from the capsule to the tap delivering spout.

Preferably, the tap comprises a delivering arm constrained to the tap body, and the unit for dispensing beverages is mounted on the delivering arm. Advantageously, the arm can rotate with respect to the tap, for example by 360°, to allow the unit for dispensing beverages to be moved from a position above the counter top to a position above the sink, etc. This characteristic is useful for allowing, for example, to fill high bottles, otherwise they could not be inserted between the counter top and the unit for dispensing beverages. Preferably, the delivering arm is not separable from the tap.

In the light of the above, the tap according to the present invention is suitable to be used for instantly dispensing beverages, by inserting interchangeable capsules containing aromas, flavouring substances, powders or food preparations, etc., in the dispensing unit and controlling the delivery of one of hot water, cold water, mixed water and, optionally, treated water to the unit for dispensing beverages. The beverage is dispensed instantly, because the water flows through the capsule and flows out of the unit for dispensing beverages in a few seconds.

In general, therefore, the tap can be configured with:
- separate and independent connections to corresponding pipes for feeding hot water, cold water, treated water, water for beverages, wherein the water for beverages and treated water are provided by specific systems positioned under the sink, and in this case the controlling means simply control the passage of water selectively in each pipe toward the corresponding destination, that is, toward the delivering spout, or toward the unit for dispensing beverages, or again toward the bypass duct,
or is configured with:
- connections to pipes for feeding hot water, cold water, treated water, and in this case the controlling means not only control the passage of the water but also provide for switching toward one of the destinations, that is alternately toward the delivering spout or toward the unit for dispensing beverages, or even toward the bypass duct.

A second aspect of the present invention relates to the method according to claim 15 for instantly dispensing beverages, starting from preparations or substances contained in capsules.

In particular, the method comprises:
a) providing a two- or more way tap having the characteristics described above;
b) connecting a unit for dispensing beverages, of the capsule type, to the tap, in such a way that the unit for dispensing beverages can be fed with water controlled by the tap;
c) inserting a capsule into the unit for dispensing beverages and controlling the delivery of water through the capsule inserted in the unit for dispensing beverages by the tap, thus obtaining the dispensing of the beverage.

The advantages offered by the method are the same as those described above in relation to the tap: eliminating specific home appliances for the preparation of beverages starting from the capsules, and possibility of regulating the temperature of the beverages dispensed, for each dispensing, that is, from time to time for each capsule used.

In an embodiment of the tap according to the present invention, the beverage can be dispensed from the special unit simultaneously with the delivery of water from the delivering spout. In this embodiment, the unit for dispensing beverages is fed with special pipes coming from under the sink, for example from a boiler or a device that makes the sparkling water, and the mixer is fed with conventional hot water and cold water hoses. The dispensing of a beverage is controlled by the electronic panel and the delivery of water from the tap delivering spout is controlled by the mixer and can occur simultaneously.

In the present context, the term beverage means a liquid substance other than mains water or water treated with filters.

### Brief list of the figures

Further characteristics and advantages of the invention will be more evident by a review of the following specification of a preferred, but not exclusive, embodiment shown for illustration purposes only and without limitation, with the aid of the attached drawings, in which:
- figure 1 is a perspective view of a tap according to the present invention;
- figure 2 is a perspective and exploded view of a tap piece shown in figure 1;
- figure 3 is a sectional view of a part of the tap shown in figure 1, taken in a first vertical plane;
- figure 4 is a sectional view of the tap shown in figure 1, taken in a second vertical plane;
- figure 5 is a sectional view of a part of the tap shown in figure 1, taken in the first vertical plane;
- figure 6 is a sectional view in a horizontal plane of a piece of the tap shown in figure 1, in a first delivery configuration;
- figure 7 is a sectional view of a part of the tap shown in figure 1, taken in the second vertical plane;
- figure 8 is a sectional view in a horizontal plane of a piece of the tap shown in figure 1, in a second delivery configuration;
- figure 9 is a perspective and exploded view of the tap shown in figure 1;
- figure 10 is a sectional view of the tap shown in figure 1, taken in the first vertical plane.

### Detailed description of the invention

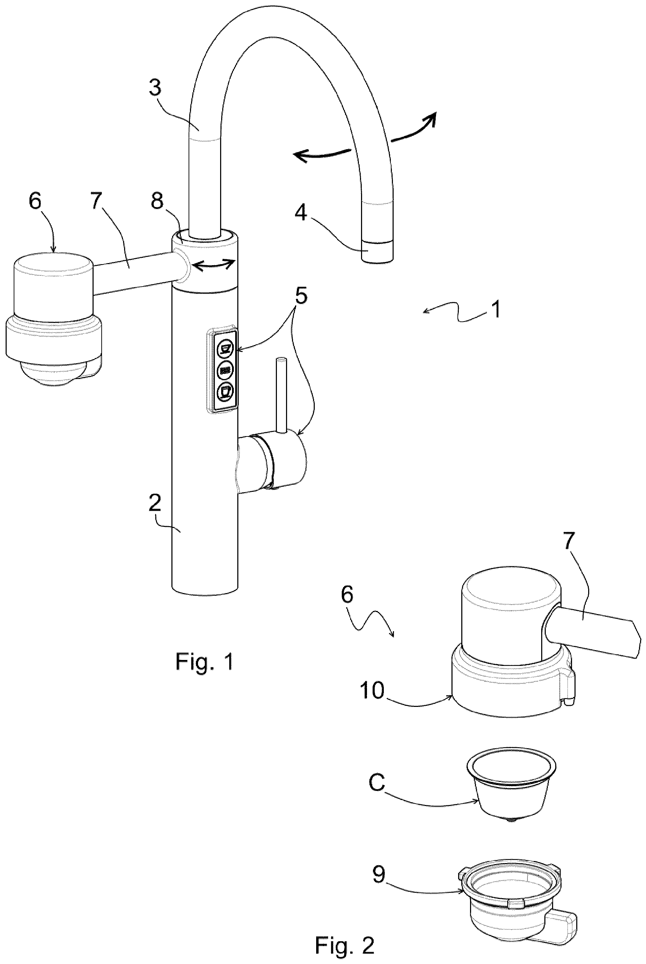

In figure 1, the reference numeral 1 generally denotes a water tap 1 according to the present invention. The tap 1 comprises a body 2, for example made of steel or brass, which can be fastened to the counter top (top) of a kitchen or to a sink, so as to cantilever vertically, and a water delivering spout 3, which is mounted on the body 2 and rotatable with respect thereto, as depicted by the two arrows at the outlet mouth 4 in figure 1. In the example shown in the figures, the spout 3 is arched but in general it can be made with different shapes, for example U-shaped with 90° angles. The outlet mouth 4 of the spout 3 is preferably equipped with an aerator that can be unscrewed.

The tap 1 is also equipped with controlling means generally denoted by the reference numeral 5, whose operation will be described in detail below.

The tap 1 is provided with a dispensing unit 6 of the capsule type, which allows to instantly prepare and dispense cold or hot beverages, by using interchangeable capsules filled with food substances, for example ground coffee, tea, chamomile flowers, infusions, aromatic herbs, etc.

The capsule dispensing unit 6, from now on, for simplicity's sake simply *dispensing unit* 6, is mounted on an arm 7 defined as delivering arm, which is rotatably constrained to the tap body 2, as depicted by the double arrow at the joining element (fitting) 8 in figure 1.

Figure 2 is an enlarged, perspective and exploded view of the dispensing unit 6. The letter C denotes a capsule containing ground coffee, made of plastic, aluminium or compostable bioplastics, that is a native starch-based plastic. The dispensing unit 6 in turn comprises a cup-shaped container 9, which can be handled by the user, in which the capsule C can be inserted, and a seat 10 to which the container 9 can be screwed in a fluid-tight manner. The cup-shaped container 9 and the seat 10 together define an infusion chamber in which the capsule C is located. As it will be described below, the infusion chamber can be fed with hot water, or cold water, or mixed water, or treated water, selectively in response to commands given by the user to the tap 1 by means of the controlling means 5.

Obviously, adapting or reducing elements can be combined with the cup-shaped container 9 and allow to change the format of the capsules C that can be inserted therein.

The cup-shaped container is pierced at the bottom to allow the beverage to be dispensed outside the tap 1. As it can be deduced from figures 1 and 2, preferably the water path in the dispensing unit 6 is vertical, to take advantage of the gravity drop from the seat 10 through the capsule C and, finally, through the outlet hole of the cup-shaped container 9.

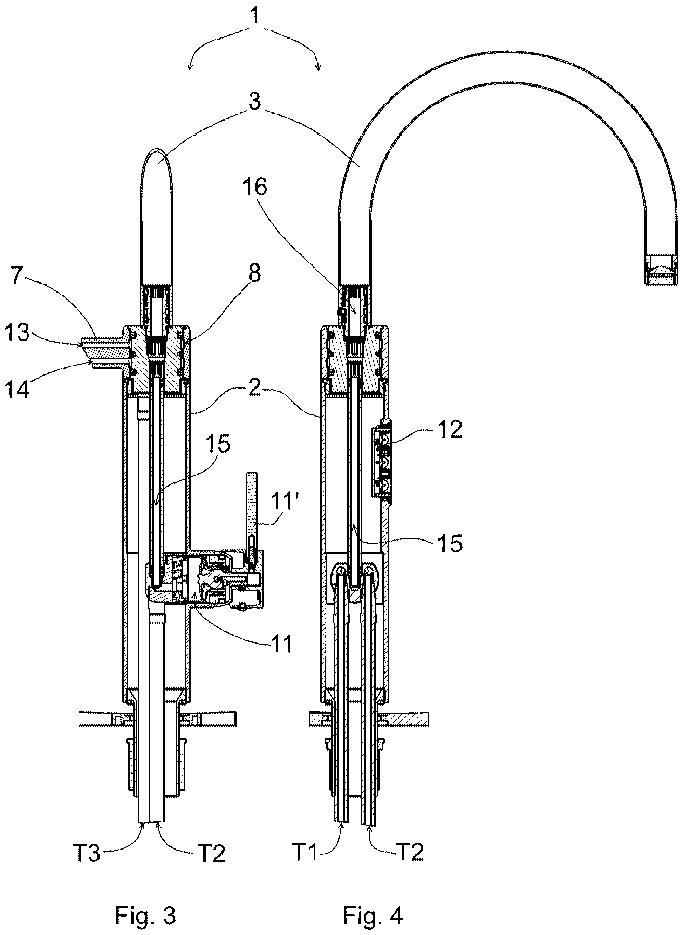

Figure 3 is a vertical sectional view of the tap 1, taken on a plane orthogonal to the delivering spout 3, and figure 4 shows the tap 1 in vertical section, on a plane containing the delivering spout 3.

With reference to both figures 3 and 4, the controlling means 5 comprise a mixing cartridge 11, or more simply a mixer 11, which is connected to two pipes T1 and T2 arranged in fluid communication with the cold water and hot water hoses available under the sink. The mixer 11 is provided with separate connections to the pipes T1 and T2 and with superimposed and movable ceramic plates to intercept the two water inlets, adjust the flow rate and vary the mixing ratios of cold water and hot water uniquely depending on the position taken by the control lever 11'.

The pipes T1 and T2 are intercepted by the mixer 11 and from this the water is conveyed to the spout 3 of the tap 1 through the ducts 15 and 16. In this circumstance the tap 1 can be connected to a further pipe T4 for feeding water coming from under the sink in order to feed the dispensing unit 6 only.

Alternatively, as it will be explained a little further below, the water exiting the mixer 11 can be alternately and selectively directed to the spout 3 or to the dispensing unit 6, by providing a switching element or a valve functionally interposed downstream of the mixer 11 with respect to the direction of the water flow, which can be operated by the user.

The tap 1 is optionally equipped with a third pipe T3 distinct from the previous pipes T1 and T2, and optionally with a fourth pipe T4, which is connectable to an external device positioned under the sink, whose function is to deliver treated water, i.e. sparkling water or filtered water, for example, micro-filtered.

In the example shown in the figures, the pipe T3 extends in the body 2 of the tap 1 directly to the rotatable joining element 8, without being intercepted by the mixer 11, and from this to the dispensing unit 6. In general, however, the tap 1 can be made by taking care to intercept the pipe T3 with a switch or valve, in such a way as to also subject the pipe T3 to the mixer 11 or to intercept the pipe T3 with a two-way switch to selectively direct the treated water to the delivering arm 7 or the delivering spout 3, at the user's choice.

Returning to the example shown in the figures, the pipe T3 of the treated water is connected to the rotatable joining element 8, to place the dispensing unit 6 in fluid communication with the external device that provides the treated water.

The controlling means 5 also comprise an electronic panel 12 with buttons, for example of the touch type, which in the example shown is battery-powered and connected wirelessly to the external device that provides the treated water. By acting on the panel 12, the user can control the delivery of treated water to the pipe T3 and then feed the dispensing unit 6 into which a capsule C has been previously inserted.

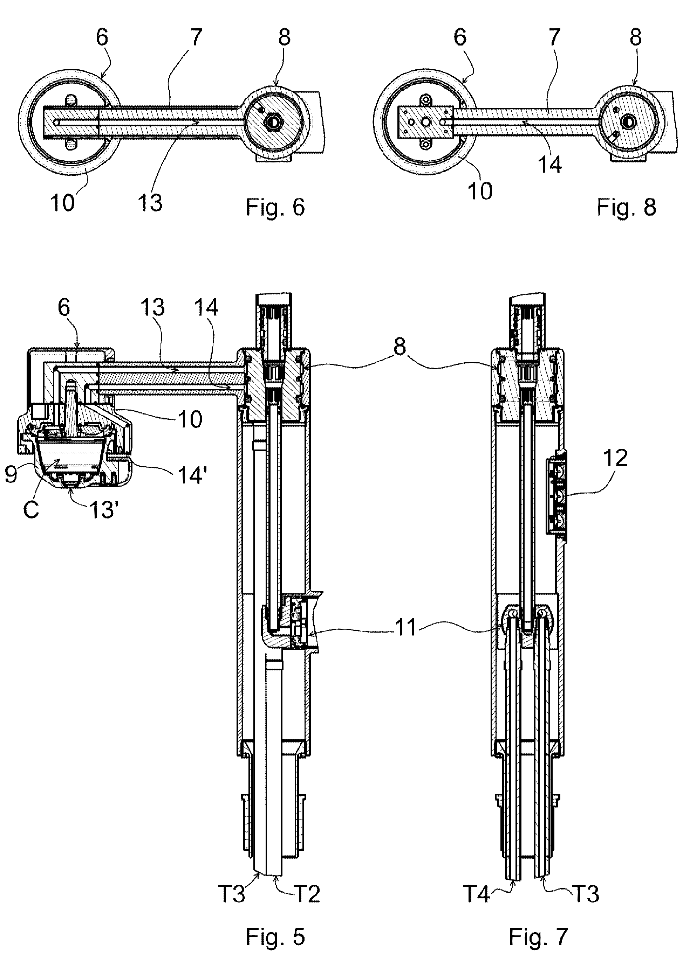

In the embodiment shown in figure 3, two ducts 13 and 14 are provided in the delivering arm 7. The duct 13 is connected to the duct 15 coming from the mixer 11 and is directed toward the cup-shaped container 9, i.e. toward the capsule C; the duct 14, defined bypass duct, is directed to the dispensing unit 6 but it does not intercept the capsule C, on the contrary it opens to the outside at a second hole 14' of the dispensing unit 6, different from the hole 13' for dispensing beverages, as best shown in figure 5. The duct 14 constitutes the continuation of the pipe T3 of the treated water, that is of the water that does not pass through the mixer but that is provided directly, just through the pipe T3, by the special apparatus arranged under the sink. The duct 15 is fed with the water coming out of the mixer 11, which can be cold, hot or mixed depending on the position of the lever 11' and this allows to dispense hot, cold beverages or beverages at the temperature desired, by simply mixing the water by the mixer 11.

In practice, the reference 15 denotes the duct that leads from the mixer 11 to the joining element 8 where the delivering arm 7 is fitted. The reference 16 denotes the duct connecting the joining element 8 to the outlet mouth 4 of the spout 3 of the tap 1.

In an embodiment, the switching between the ducts 15+13 and the ducts 15+16 occurs by rotating the arm 7, since the joining element 8 operates just like a switch, that is, as a valve: when the arm 7 is oriented with respect to the body as shown in figure 1, the duct 15 exiting the mixer 11 is placed in fluid communication with the duct 13 directed to the capsule C; when the arm 7 is aligned with the spout 3, that is, it is aligned with the electronic panel 12, the duct 15 exiting from the mixer 11 is placed in fluid communication with the duct 16 directed to the spout 3.

In the example just described, the tap 1 has four ways: two ways defined by the pipes T1, T2 and by the ducts 15 and 16 for feeding hot water, cold water and mixed water to the spout 3; a third way defined by the pipes T1 and T2 and by the ducts 15 and 13 for dispensing beverages through the dispensing unit 6; a fourth way defined by the pipe T3 and the duct 14 for delivering treated (sparkling or filtered) water through the outlet hole 14' (figure 5) formed on the dispensing unit 6 (bypass).

Figure 5 shows a vertical section of the tap 1 configured to dispense a beverage from the special unit 6. The bypass duct 14 extends from the joining element 8, which in this example functions as a switch or valve, to the hole 14', while the duct 13 opens onto the top of the seat 10, just above the capsule C, in such a way that the beverage falls by gravity through the outlet hole 13' present on the cup-shaped container 9.

Figure 6 shows the tap 1 in section and in plane, in the same configuration as in figure 5, that is with the duct 13 arranged to feed water to the capsule C.

Figure 8 shows the tap 1 in section and in plane, in the same configuration as in figure 5, that is with the duct 14 arranged to deliver treated, sparkling or filtered water to the outlet hole 14'.

As explained above, the ducts 13 and 14 can be fed by corresponding external pipes subjected to the control of the controlling means 5, as shown in figure 7, otherwise the duct 13 is fed with the water coming from the mixer 11, that is, the same water provided to the delivering spout 3, and in this circumstance the tap 1 integrates a switch/valve, which in the example described is constituted by the joining element 8, which selectively opens and closes the ducts 13 and 16 depending on the angular position with respect to the body 2, that is when rotating, it acts as a valve.

Figure 7 shows the case in which the tap is connected, in addition to the pipes T1 and T2 of cold water and hot water, also to the pipe T3 of the treated water and to a fourth pipe T4 of water intended exclusively for the dispensing unit 6, which is provided for example by an apparatus placed under the sink and whose temperature is programmable. In this case, the delivery through the pipe T4 and the duct 16 occurs with a special command given by the user by means of the electronic panel 12, which is connected to the apparatus placed under the sink. In the example shown in figure 7, the tap 1 can provide water to the capsule C both through the mixer 11, by using mixed water sent through the duct 15, and directly through the pipe T4, by activating, through the control panel 12, the corresponding external device placed under the sink, at the user's choice. For example, if the mains water is excessively hard, the user can choose to prepare the beverage by using filtered and heated water provided by the external device through the pipe T4.

When the fourth pipe T4 is also provided, the dispensing of the beverage from the dispensing unit 6 (controlled by the panel 12) can occur simultaneously with the delivery of water from the delivering spout 3 (controlled by the mixer 11).

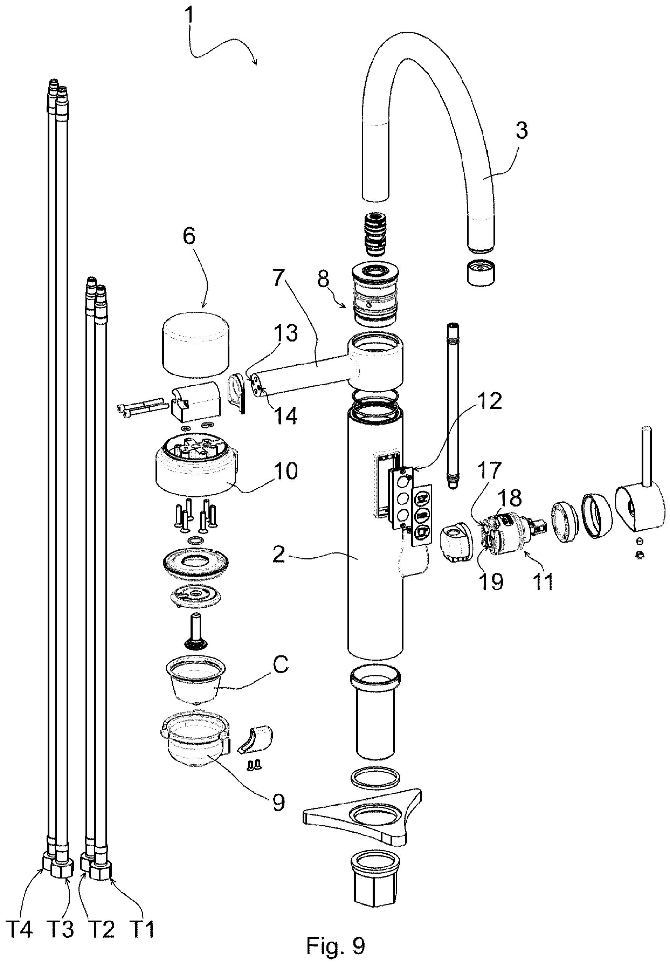

Figure 9 is an exploded view of the tap 1 from which some constructive details can be better appreciated. It is possible to note, for example, that the electronic panel 12 is preferably extractable: the reason for this is the possibility of replacing the batteries in case of wireless connection, for example in Bluetooth mode, to a device or apparatus placed under the sink that provides treated water and/or water for beverages.

The mixer 11 is provided with separate inlets 17 and 18 for cold water and hot water coming from the pipes T1 and T2, and with an outlet 19 for mixed water directed to the duct 15.

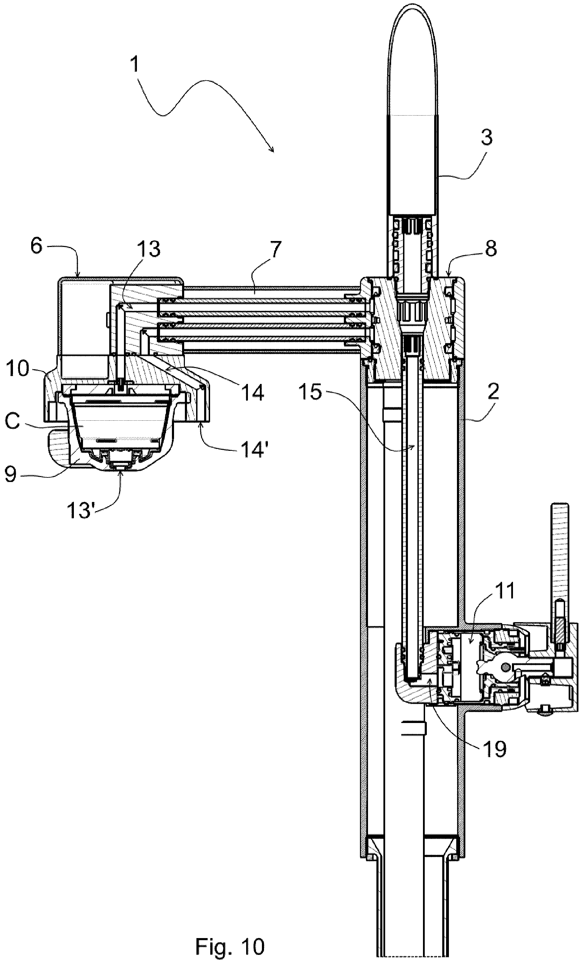

Figure 10 is a vertical sectional view of the complete tap 1. The electronic panel 12 with buttons is covered from view. The ducts 13, 14, 15 and 16, the mixer 1, the joining element 8, which functions as a rotary valve for switching the outlets, are clearly visible: the delivering spout 3 or duct 13 of the dispensing unit 6, while the hole 14' is fed directly by the pipe T3, which is not intercepted by the mixer but is in any case subjected to the controls of the control panel 12 for delivering water from the device arranged under the sink.

The operation of the tap 1 is simple: the tap 1 functions both as a normal mixer tap, and the user can therefore control the delivery of cold water, hot water or mixed water from the spout 3, and as a machine for dispensing beverages, and the user can control the dispensing of beverages prepared instantly with the capsules C or the delivery of filtered or sparkling water, all by simply acting on the mixer 11 and the control panel 12.

It is also possible to provide for delivering filtered sparkling water by providing the passage of water in the filtering device and in the device for adding carbon dioxide.

In an embodiment, the pipes T3 and T4 are Teflon pipes having a diameter of a few millimetres and are contained in a piping having a larger diameter, which has the task of providing adequate insulation. Alternatively, the pipes T3 and T4 are externally coated with a thermally insulating material, for example a sheath or a braid.

## Claims

1. A two- or more way tap (1), **characterised by** comprising a unit (6) for dispensing beverages of the type with interchangeable capsules (C).

2. Tap (1) according to claim 1, configured with three or more ways, two ways for delivering cold water, hot water and mixed water through a delivering spout (3), and the third way for dispensing beverages through the unit (6) for dispensing beverages.

3. Tap (1) according to claim 1 or claim 2, comprising a body (2) which can be fastened to the counter top of a kitchen or to a sink, connecting means for connecting to outer pipes (T1, T2, T3, T4) for feeding hot water, cold water and, optionally, treated water, a delivering spout (3) extending from the body (2) of the tap (1) and controlling means (5) which can be operated by the user to control the delivery of hot water, cold water, mixed water and, optionally, treated water, wherein the unit (6) for dispensing beverages can be selectively fed with one of hot water, cold water, mixed water and, optionally, treated water.

4. Tap (1) according to claim 3, wherein the controlling means (5) comprise a mixer (11) placed in fluid connection with the outer pipes (T1, T2) for feeding hot water and cold water, and placed alternately and selectively in fluid communication with the delivering spout (3) or with the unit (6) for dispensing beverages.

5. Tap (1) according to claim 4, wherein the controlling means (5) comprise a control panel (12) to control outer devices for delivering treated water, or a switching element (8), and wherein the unit (6) for dispensing beverages is placed, by the controlling means (5), alternately and selectively in fluid communication with the outer devices for delivering treated water, or with the mixer (11).

6. Tap (1) according to one of the preceding claims, wherein the treated water is selected from filtered water and sparkling water.

7. Tap (1) according to one of the preceding claims, wherein the unit (6) for dispensing beverages comprises a housing (9) for a single capsule (C), wherein a first duct (13) for the inflow of water is arranged at one side of the housing, and at an opposite side the housing is equipped with a first hole (13') for dispensing the beverage prepared with the capsule (C), different from the outlet mouth (4) of the tap delivering spout (3).

8. Tap (1) according to claim 7, wherein said housing (9) is defined by a cup-shaped container equipped with said first dispensing hole (13'), into which a single capsule (C) can be inserted, and by a corresponding a seat (10), to which the cup-shaped container (9) can be coupled, and at which seat said first duct (13) for the inflow of hot water, or cold water or mixed water and, optionally, treated water, is arranged.

9. Tap (1) according to claim 7 or claim 8, wherein the unit (6) for dispensing beverages comprises a second dispensing hole (14') fed with treated water.

10. Tap (1) according to one of the preceding claims, wherein the unit (6) for dispensing beverages comprises a first duct (13) for the inflow of water that intercepts a housing (9), into which a capsule (C) can be inserted, and a second duct (14), defined as by-pass duct, which does not intercept said housing (9), for the independent delivery of treated water.

11. Tap (1) according to claim 10, wherein the water fed to the first duct (13) or to the second duct (14) of the unit (6) for dispensing beverages is directly delivered outside the dispensing unit (6) and it is not redirected to the delivering spout (3).

12. Tap (1) according to one of the preceding claims, comprising a delivering arm (7) constrained to the body (2) of the tap (1), and wherein the unit (6) for dispensing beverages is mounted on the delivering arm (7).

13. Tap (1) according to claim 12, wherein the delivering arm (7) is rotatable with respect to the body (2) of the tap (1) and preferably, the rotation involves switching between at least two ways of the tap (1).

14. Use of the tap (1) according to any one of claims 1-13 for instantly dispensing beverages by inserting interchangeable capsules (C) containing flavours, flavouring substances, powders or food preparations, into the unit (6) for dispensing beverages, and by controlling the delivery of one of hot water, cold water, mixed water and, optionally, treated water, to the unit (6) for dispensing beverages.

15. A method for instantly dispensing beverages from preparations contained in capsules (C), comprising:
a) providing a two- or more way tap (1);
b) connecting a unit (6) for dispensing beverages, of the capsule type (C), to the tap (1), in such a way that the unit (6) for dispensing beverages can be fed by at least one way of the tap (1);
c) inserting a capsule (C) into the unit (6) for dispensing beverages and controlling, through the controlling means (5), the delivery of water through the capsule (C), thus obtaining the beverage to be dispensed.

16. Method according to claim 15, comprising connecting the tap (1) to outer pipes (T1, T2, T3, T4) for feeding hot water, cold water and, optionally, treated water, and implementing step c) by controlling with the tap (1) the selective delivery to the unit (6) for dispensing beverages of one of hot water, cold water, mixed water and, optionally, treated water.

17. Method according to any one of the preceding claims, wherein the treated water is selected from sparkling water and filtered water, and is provided by an outer device positioned under the sink and connected to the tap (1).

18. Method according to any one of the preceding claims, wherein the tap (1) is equipped with a delivering spout (3), which can be fed with cold water, hot water or mixed water, and the dispensing unit (6) can be fed with cold water, hot water, mixed water and, optionally, treated water.
